# EUROPEAN PATENT APPLICATION

(11) **EP 1 863 232 A1**
(43) Date of publication of application: **05.12.2007**
(21) Application number: 06290854.6
(22) Date of filing: 29.05.2006
(51) Int. Cl.: H04L 12/56

(54) **On-chip bandwidth allocator**

(71) Applicant: STMICROELECTRONICS SA, 92120 Montrouge (FR)
(72) Inventor: Locatelli, Riccardo, 38000 Grenoble (FR); Coppola, Marcello, 38430 Moirand (FR); Maruccia, Giuseppe, 38000 Grenoble (FR); Pieralisi, Lorenzo, 38180 Seissins (FR)
(74) Representative: Delprat, Olivier

(57) **Abstract**

This bandwidth allocator comprises:
- a set of routers (R) for processing the packets through the network; and
- processing means (CTRL, PA) distributed within the routers for controlling the routers to control transmission of each data of said data packets through the routers to provide a bandwidth for each data packet.

This bandwidth allocator uses network interfaces (NI₁, NI₂, NI₃) comprising means for filling a header field of each data packet with a header field information depending on a requested bandwidth, said processing means comprising means for controlling transmission of the data packets through the routers as a function of the value of the header field information of each data packet.

## Description

The invention relates in general to packet forwarding operations in on-chip communication networks and, in particular, to a bandwidth allocator for allocating in real time shared resources of an on-chip network for routing data packets between elements of the network, such as calculating means, memory means.

An on-chip network, or Network on Chip NoC, is based on packet-based communication and relies on a layered definition of the communication. NoC intends to replace buses for overcoming their limitation in terms of scalability, wire efficiency and performance.

There are different fundamental approaches towards building a network core for routing data.

Networks based on reservation of connections imply arrangements which are rather complicated and are not appropriate for allocating resources within a low cost arrangement.

In packet switched networks, the resources are not reserved. Packets use the resources on demand, and as a consequence, may have not to wait for access to communication link.

Reference can be made to document US 2004/021 06 95 which discloses methods and apparatuses for controlling a data routing using an arbitration logic. The apparatuses disclosed in this document comprise an arbitration controller having a plurality of inputs that receive one or more transactions from a plurality of blocks of functionality. The arbitration controller arbitrates requests for access to shared resources among the plurality of blocks of functionality by implementing an arbitration policy for allowing data packets to be transferred with a requested quality of service (QoS), in particular a requested bandwidth.

The arbitration logic is based on the using of a sort of priority bit written in the data packets to be transferred, the shared resources being allocated to the packets according to the value of the priority bit.

However, the systems disclosed in this document are intended to be used to transfer data on a bus architecture and are not intended for allocating shared resources on a network on-chip.

In addition, in this communication system, the value of the priority bit is allocated to data flow only when the priority is to be changed. Groups of packets are identified by tagging the begin or the end.

In other words, all the flows having the same level of priority are not tagged with the information bit, such that problems may arise when bits of data flows previously sprayed in the network have to be gathered together. Moreover each time more flows are concentrated the tagging must follow composition rules not trivial to implement.

In addition, with this kind of resource allocation method, it is not possible to use any kind of arbitration method, such as WRR ("Weighted Round Robin") or priority or other possible schemes. In view of the foregoing, an object of the present invention is to propose a bandwidth allocator for allocating in real time shared resources in an on-chip network of a simple architecture, and in which any kinds of allocating strategies may be used.

Accordingly, the invention proposes a bandwidth allocator for allocating in real time shared resources of a network on-chip for routing data packets between elements of the network in response to requests to access said shared resources, said bandwidth allocator comprising:
- a set of network interfaces for processing data packets to be routed within the network ;
- a set of routers for routing the packets through the network ; and
- processing means distributed within the routers for controlling the routers to control transmission of each data of said data packets in the routers to provide a bandwidth for each data flow.

In addition, the network interfaces comprise means for filling a header field of each data packet with a header field information depending on a requested bandwidth, said processing means comprising means for controlling transmission of the data packets through the routers as a function of the value of the header field information of each data packet.

According to another feature of the invention, the processing means are adapted to control transfer of data of packets admitted in parallel in each routers, such that data having a same header field information value are grouped together to be transferred together through the routers.

According to yet another feature of the invention, the allocator comprises an arbitration controller for controlling the routers and means for allocating a priority value to each data packet for said arbitration controller.

For example, the processing means comprise means for storing a current header field information value and means for comparing the current header field information value with the header field information value stored in the header of each incoming data packet.

The allocator may further comprise means for controlling transfer of data packets having a same header field information value.

For example, in one embodiment, each network interface is adapted to fill the header field of each data packet with a packet priority information, said processing means comprising an arbitration controller adapted to control transfer of data according to the value of the packet priority information.

According to another embodiment, the processing means comprise an arbitration controller having scheduling means for controlling transfer of data having a same header field information value, said scheduling means being of the type WRR, RR or LRU scheduling means.

According to another feature of the invention, for example, the allocator may comprise means for prioritizing least recently transferred data packets.

In that case, the allocator comprises, for example, means for writing a third information value in each header field of each data packet not transferred.

According to another aspect, the present invention proposes, in addition, a process for allocating in real time shared resources of a network on-chip for routing data packets between elements of the network in response to requests to access said shared resources, said process comprising:
- filling a header field of each data packet with an header field information depending on a requested bandwidth, and
- controlling transmission of the data packets through routers as a function of the value of the header field information of each data packet.

In one embodiment, the header field can be filled with an header field information generated from a count of the size of the requested transfer comparing versus a dynamic/fixed threshold.

Other features and advantages of the present invention will become apparent from the following description, in view of the appended drawings, in which:
- figure 1 illustrates schematically the routing strategy of data packets according to the invention;
- figure 2 illustrates a block diagram of an embodiment of routing means according to the invention;
- figure 3 illustrates a block diagram of an embodiment of the routing means and, in particular, of the arbitration controller to elaborate the priority value.

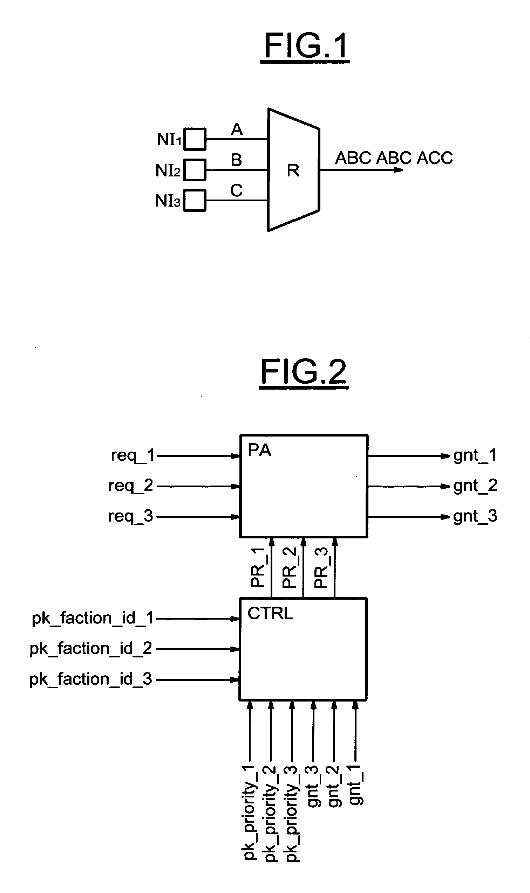

Reference will now be made to figures 1 and 2 which illustrate a bandwidth allocator according to the invention. This allocator is intended to provide a flexible, scalable and low cost management for allocating variable bandwidth for data packets to be routed within an on-chip network.

Referring to figure 1, the network is provided with a set of routers R which is connected to respective network interfaces N11, N12 and N13 in which data packets to be transferred are entered.

In the embodiment disclosed in Figure 1, the network of routers R receives packets of data from the network interfaces NI₁, NI₂ and NI₃. Access to shared resources is controlled by arbitration means included in each router.

More particularly, within each router output link are shared resources. Arbitration means, depicted in Figure 2, included in each router arbitrates the resources such that data packets from the network interfaces NI₁, NI₂ or NI₃ are arbitrated through the routers they are going to cross accordingly to priority policy.

Each packet, denoted A, B or C, is associated with a weighting factor, for example 3, 2 or 4 such that, after routed by a corresponding router, the data packets are transmitted according to the value of the weighting factor.

For example, as illustrated if data packets A, B and C are allocated with weighting factors 3, 2, 4 respectively, the transmitted word of packets will be, in one embodiment, ABC ABC ACC. But the sequence can be different in another embodiment depending on the arbitration scheme used within the word of packets, for instance AAA BB CCCC.

As illustrated in figure 2, arbitration means of each router are used to grant or not access to the shared resources for each request req-1, req-2 or req-3, to access said resource, by setting the value of a grant signal gnt-1, gnt-2 or gnt-3 associated with each request input.

As also illustrated, arbitration means of each router comprises a priority arbiter PA intended to grant or not access to the shared resources and an arbitration controller CTRL which elaborates and allocates priority values to each data packet entered to the router, with a view to schedule transmission of each data packet to allow a higher priority PR-1, PR-2 or PR-3 to one of the request req-1, req-2 or req-3 to access shared resources of the network inputted in the router.

The execution strategy is based on the use of priority information introduced within the header filled of injected packets.

In particular, the network interfaces N11, N12 and N13 are provided with means and are dully programmed for filling the header QoS field for each injected packet with the following bits:
- PK-faction-id: this header field information corresponds to the priority information associated to each packet and, for example, may have two values, namely "one" or "zero";
- PK-priority: this packet priority information is the priority specified for each packet within a set of packets having the same PK-faction-id and is used, in one embodiment of the invention, to allocate particular priority to each of these packets having a same header field information; and
- PK-priority-FBA: this third information value is written in each header field and is used to allocate priority for each data packet not transferred or, in other words, to the least recently served packets.

These information are entered within the arbitration controller CTRL to schedule priority and allocate the shared resources (figure 2).

Accordingly, as illustrated in figure 2, when each data packet is entered within the on-chip network, the packets are first tagged with the information PK-faction-id-1, PK-faction-id-2 or PK-faction-id-3 depending on a requested bandwidth and the packets from different sources are transferred, at each router of the network R, such that packets having the same priority information PK-faction-id-i are grouped to move together. For example, the header field information PK-faction-id-i and the third information value PK-priority-FBA-i used to prioritize packets least served are coded using one bit, whereas the packet priority information PK-priority-i is coded using two bits. However, this packet priority information may be coded, if needed, using a different number n of bits, greater than 2.

It should be noted that a requested bandwidth is expressed in bytes and corresponds to the global amount of data transferred, computed from the opcode size, by a considered one network interface in a given round during which the packets are transferred using a same information PK-faction-id, at a specific target.

The round at the specific target is a given number of variable accesses. The size of bytes read or written in that round represents the percentage of variable bandwidth demanded by this initiator flow.

As previously indicated, the priority information PK-faction-id-i may have two values, namely one or zero, depending on the requested bandwidth for reaching a specific target.

In addition, the data packets that have to be transferred together are tagged by the same PK-faction-id-i. For that purpose, each network interface NIi accumulates the opcode size associated to each packet and tags with the same priority information all the packets until the threshold value is reached. Then, the priority information is switched, and the data transfer size is once again accumulated until the threshold is reached again. In one embodiment the threshold can be fixed and in another embodiment it can vary dynamically with specific hardware of software means to control its value.

Accordingly, the arbitration controller gives high priority PR-i to packets which have the same header field information. The thus labelled data packets are transferred first.

As concerns the data packets having the same priority information PK-faction-id, the arbitration controller CTRL may, as indicated above, either use a known arbitration strategy, for example of the type RR ("Round Robin"), WRR ("Weighted Round Robin") or LRU ("Least Recently used"). However, other known strategies may also be used instead.

According to another embodiment, specific priority may be allocated to each data packet having a same priority information PK-faction-id-i using the packet priority information PK-priority-1, PK-priority-2 or PK-priority-3 such that the router transfers first the data packets having the higher packet priority information.

As previously indicated, the data packets are transferred by the routers according to the value of the priority information. In particular, the arbitration controller CTRL stores, within a register, the current value of the priority information PK-faction-id of transferred data packets.

For that purpose, the header field information included within the QoS header of each incident packet is compared with the current value stored within the register. When the value of this information corresponds to that of the current information stored within the register, the packet is tagged with a high priority in order to be transferred together with the data packets having the same priority information.

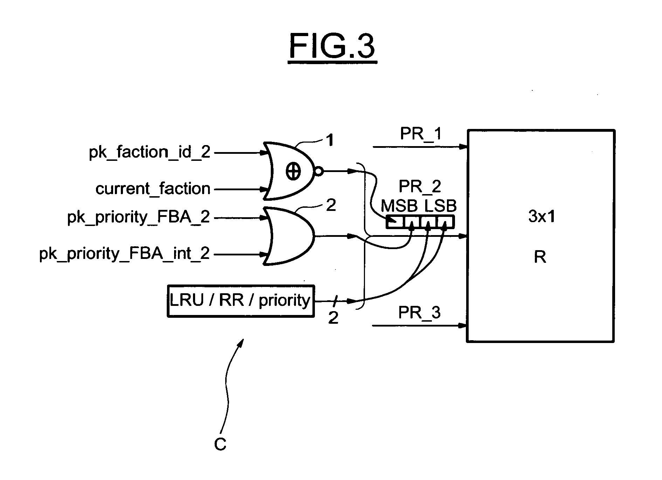

As illustrated by figure 3, the arbitration controller is, for that purpose, realized using a simple logic circuitry.

For example, in one specific embodiment, this logic circuitry comprises a first logic gate 1 realizing the logical function "NOT (XOR)" between the header field information PK-faction-id-i and the current header field information. A second logical gate 2 realizes the logical function "OR" between the third information allocating for each data packet not transferred a priority PK-priority-FBA-i, locally tagged or previously written at a previously reached router and a corresponding information PK-priority-FBA-int-i computed internally by the arbitration controller associated with a present router.

At last, another priority information is elaborated using the PK-priority data. Otherwise, as previously indicated, a conventional arbitration strategy block 3 may be used to elaborate priority information for data packets having a same header field information.

Each information provided by the logical elements 1 and 2 or by the block 3 are used to elaborate a priority word the most significant bit MSB of which corresponds to the output of the first logical gate 1, whereas the two least significant bits LSB correspond to the priority information provided by the third block 3.

Accordingly, the most significant bit MSB is set to one when the priority information provided by a logical gate 1 is equal to the corresponding information stored within the register of the arbitration controller. This means that the current packet belongs to the current information value and must have highest priority.

The two least significant bits correspond to the field of the packet header previously called PK-priority or is generated by the RR or WRR logic or by the LRU logic.

At last, the bit issued by the second logical block 2 is used to set a high or a low priority to packets that have not been transferred or that have been transferred in a previous round. This reduces latency because flows that miss a round will be prioritized in the following round. This bit can be constituted by a value reported in the header or computed internally by the arbitration controller unit as result of the last round local to this router.

The information PK-priority-FBA-int is updated when the priority information changes.

In such a case, this data PK-priority-FBA-int is set for each input not served in previous rounds and is copied within the header of each packet arising from the same entry.

At last, as concerns the current priority information stored within the register of the arbitration controller, this value is maintained when an incident packet has the same information data value or when no packet arrives.

On the contrary, this value is changed when there is no packet having this priority information value.

For that purpose, bits of the header PK-faction-id, which are allowed to pass, are simply sampled to determine the value of the internal priority value.

It should at last be noted that the main benefits of the bandwidth allocator according to the invention are the following:

It is only requested to program the network interface with the requested bandwidth value.

In addition, the routers have no register to be programmed. Their behavior is fixed.

Furthermore, the quality of service QoS is not explicitly linked to the path of flow through the routers, but only to the injection point, namely the network interface. For instance, routing can be changed without any effort to recompute the path followed by the flow and the consequent QoS parameters along this new path. The proposed scheme is good to support hierarchical multi-hop distributed interconnected such as the network on chip.

Bandwidth can be proportionally allocated, but flows can be prioritized in a round using any available standard arbitration scheme or a per-packet priority scheme.

Least recently used packets can be automatically and dynamically prioritized through the entire netwrk to limit maximum latency.

At last, the router implements a simple arbiter, without any need of counter or slow complex logic.

## Claims

1. Bandwidth allocator for allocating in real time shared resources of a network on-chip for routing data packets between elements of the network in response to requests to access said shared resources, comprising a set of network interfaces (NI₁, NI₂, NI₃) for processing data packets to be routed within the network ;
- a set of routers (R) for routing the packets through the network; and
- processing means (CTRL, PA) distributed within the routers (R) for controlling the routers to control transmission of each data of said data packets through the routers to provide a bandwidth for each data flow,
said network interfaces (NI₁, NI₂, NI₃) comprising means for filling a header field of each data packet with a header field information (PK-faction-id) depending on a requested bandwidth, said processing means comprising means for controlling transmission of the data packets through the routers as a function of the value of the header field information of each data packet.

2. Bandwidth allocator according to claim 1, **characterized in that** said processing means (CTRL) are adapted to control transfer data of packets admitted in parallel in each routers, such that data having a same header field information value are grouped together to be transferred together through the router.

3. Bandwidth allocator according to claim 2, **characterized in that** it comprises an arbitration controller (CTRL) for controlling the routers (R), and means for allocating a priority value to each data packet for said arbitration controller.

4. Bandwidth allocator according to claim 3, **characterized in that** the processing means comprise means for storing a current header field information value and means for comparing the current information value with the information value stored in the header of each incoming data packet.

5. Bandwidth allocator according to anyone of claims 1 to 4, **characterized in that** it further comprises means for controlling transfer of data packets having a same header field information value.

6. Bandwidth allocator according to claim 5, **characterized in that** each network interface is adapted to fill the header field of each data packet with a packet priority information (PK-priority), said processing means comprising an arbitration controller (CTRL, PA) adapted to control transfer of data according to the value of the packet priority information.

7. Bandwidth allocator according to claim 6, **characterized in that** the processing means comprise an arbitration controller (CTRL, PA) having scheduling means for controlling transfer of data having a same header field information value, said scheduling means being of the type WRR, RR or LRU scheduling means.

8. Bandwidth allocator according to anyone of claims 1 to 7, **characterized in that** it comprises means (CTRL, PA) for prioritizing least recently transferred data packets.

9. Bandwidth allocator according to claim 8, **characterized in that** it comprises means for writing a third information value (PK-priority-FBA) in each header field of each data packet not transferred.

10. Process for allocating in real time shared resources of a network on-chip for routing data packets between elements of the network in response to requests to access said shared resources, comprising:
- filling a header field of data packets with a header field information (PK-faction-id) depending on a requested bandwidth, and
- controlling transmission of the data packets through routers (R) as a function of the value of the header field information of each data packet.
